# EUROPÄISCHE PATENTSCHRIFT

(11) **EP 1 430 611 B1**
(45) Veröffentlichungstag und Bekanntmachung des Hinweises auf die Patenterteilung: **11.01.2006**
(21) Anmeldenummer: 02800079.2
(22) Anmeldetag: 10.09.2002
(51) Int. Cl.: H04B 1/38, H04B 15/04, H01Q 1/24

(54) **MODUL ZUM SENDEN UND/ODER EMPFANGEN VON FUNKDATEN**
MODULE FOR TRANSMITTING AND/OR RECEIVING RADIO DATA
MODULE D'EMISSION ET/OU DE RECEPTION DE DONNEES RADIO

(30) Priorität: 28.09.2001 DE 1123440
(43) Veröffentlichungstag der Anmeldung: 23.06.2004
(73) Patentinhaber: SIEMENS AKTIENGESELLSCHAFT, 80333 München (DE)
(72) Erfinder: WILKEN, Heinrich, 10437 Berlin (DE); SCHULTZE, Ralf, 13589 Berlin (DE)
(86) Internationale Anmeldenummer: PCT/EP2002/010141
(87) Internationale Veröffentlichungsnummer: WO 2003/030379

(56) Entgegenhaltungen:
- EP-A- 0 932 219
- EP-A- 1 102 347
- WO-A-98/01919

## Beschreibung

Die vorliegende Erfindung betrifft ein Modul zum Austauschen von Funkdaten, insbesondere von Mobilfunkdaten, in wenigstens einem Frequenzband.

Ein derartiges Funkmodul, welches eine funktionsfähige Sende-/Empfangselektronik zum Senden oder/und Empfangen von Funkdaten aufweist, wird in ein Kommunikations-Endgerät, wie beispielsweise ein Mobilfunk-Telefon, als integrales Bauteil eingebaut und ermöglicht somit eine vereinfachte Fertigung des Mobilfunk-Telefons. Allerdings bereitet bei bisher bekannten Funkmodulen dieser Art die Kontaktierung von Funkmodul und einer externen Antenne, welche in dem Mobilfunk-Endgerät bereits eingebaut oder nachträglich einzubauen ist, bei der Montage des Kommunikations-Endgeräts erheblichen Aufwand. Es ist bei der Kontaktierung nämlich darauf zu achten, daß das Funkmodul in korrekter Weise an die Antenne angekoppelt wird, beispielsweise beim Einsetzen des Funkmoduls in ein offenes Gehäuse des Kommunikations-Endgeräts. Ein weiterer Nachteil der bislang bekannten Lösung liegt darin, dass obgleich das Funkmodul durch seine integrale Bauweise zur Einsparung von Bauraum beiträgt, dennoch zusätzlicher Bauraum für die als gesonderte Komponente vorgesehene Antenne vorgesehen werden muss, wodurch die äußeren Abmessungen des Kommunikations-Endgeräts vergrößert werden.

Das Dokument EP 1 102 347 offenbart eine integrierte Antennenerdungsplatte und EMV-Abschirmstruktur, wobei die Antenne über einen Speise- und einen Erdungsstift mit der sich auf einer Leiterplatte befindenden Sende-Empfangselektronik verbunden ist.

Es ist demgegenüber eine Aufgabe der vorliegenden Erfindung, ein Funkmodul der eingangs bezeichneten Art bereitzustellen, welches bei einfacher Montage in ein Kommunikations-Endgerät die vorstehend angesprochenen Probleme hinsichtlich der Kontaktierung mit einer externen Antenne und hinsichtlich des für diese erforderlichen Bauraums löst.

Diese Aufgabe wird durch ein Modul laut Anspruch 1 zum Austauschen von Funkdaten, insbesondere von Mobilfunkdaten, gelöst, wobei das erfindungsgemäße Modul umfaßt:
- eine Sende-/Empfangselektronik zum Verarbeiten von zu sendenden oder/und zu empfangenden Mobilfunksignalen,
- Abschirmmittel zum elektromagnetischen Abschirmen der Sende-/Empfangselektronik und
- eine Sende-/Empfangsantenne zum Senden oder/und Empfangen von Mobilfunksignalen,

wobei die Abschirmmittel wenigstens einen die Sende-/Empfangselektronik kapselnden elektrisch leitfähigen Abschirmdeckel aufweisen und wobei die Sende-/Empfangsantenne derart im Bereich des wenigstens einen Abschirmdeckels angeordnet ist, daß dieser zumindest abschnittsweise beim Senden oder/und Empfangen von Mobilfunksignalen als Massefläche wirkt.

Wie bei bereits bekannten Funkmodulen ist auch bei dem erfindungsgemäßen Funkmodul die gesamte Sende-/Empfangselektronik innerhalb des Abschirmdeckels gegenüber elektromagnetischen Störungen (EMV-Maßnahme) abgeschirmt. Ferner ist jedoch unmittelbar an dem Funkmodul die Sende-/Empfangsantenne ausgebildet und zwar derart, daß diese in Wechselwirkung mit dem elektrisch leitfähigen Abschirmdeckel treten kann, um die Funksignale auszusenden oder zu empfangen. Dabei wirkt ein Teil des Abschirmdeckels zumindest abschnittsweise als Massefläche. Dies kann beispielsweise dadurch erreicht werden, daß die Sende-/Empfangsantenne in unmittelbarer Nähe zu einem flächigen Bereich des Abschirmdeckels angeordnet ist und diesen somit als Massefläche nützt. Erfindungsgemäß ist es also möglich, ein Funkmodul bereitzustellen, welches als integrale Baugruppe in ein Kommunikations-Endgerät bei dessen Montage einsetzbar ist, wobei dieses neben der Sende-/Empfangselektronik und Abschirmmitteln auch noch die zum Aussenden und Empfangen von Mobilfunk-Signalen erforderliche Sende-/Empfangsantenne umfaßt. Beim Einsetzen befindet sich das erfindungsgemäße Funkmodul bereits in einem betriebsbereiten Zustand, d.h. es ist nicht erforderlich, besondere Sorgfalt für Kontaktierung von Funkmodul und einer gesondert ausgebildeten Antenne aufzubringen. Darüber hinaus ermöglicht die unmittelbare Anbringung der Sende-/Empfangsantenne an dem erfindungsgemäßen Modul eine Platzersparnis, da keine weiteren als gesonderte Komponenten ausgebildeten Antennen innerhalb des Kommunikations-Endgeräts vorgesehen sein müssen. Es ist darauf hinzuweisen, daß diese als gesonderte Komponenten ausgebildeten Antennen in der Regel zusätzliche Masseflächen erfordern, beispielsweise zusätzliche an einer Leiterplatte vorgesehene Masseflächen, was weiteren Bauraum erfordert. Auch dieser Bauraum kann bei der erfindungsgemäßen Lösung eingespart werden.

In einer Weiterbildung der Erfindung kann vorgesehen sein, daß die Sende-/Empfangsantenne als planare Antenne ausgebildet ist. Die Ausbildung der Sende-/Empfangsantenne als planare Antenne ermöglicht eine kompaktere und platzsparendere Ausführung des erfindungsgemäßen Funkmoduls. Dabei kann in einer Weiterbildung der Erfindung vorgesehen sein, daß die Sende-/Empfangsantenne und die Massefläche in im wesentlichen parallelen Ebenen liegen. So ist es möglich, den Abschirmdeckel als quaderförmigen Hohlkörper auszuführen, dessen Grundfläche die Massefläche bildet, wobei parallel zu dieser Grundfläche die planare Antenne angeordnet werden kann.

Um eine während des Betriebs des Moduls zuverlässige Positionierung der Sende-/Empfangsantenne zu gewährleisten, kann in einer Weiterbildung der Erfindung vorgesehen sein, daß die Sende-/Empfangsantenne an einem Antennenträger aus elektrisch nicht leitendem Material, insbesondere aus Kunststoff, vorgesehen ist. Dadurch ist es möglich, die Sende-/Empfangsantenne beispielsweise durch eine auf den Antennenträger durch Galvanisieren oder dergleichen aufgetragene dünne Metallschicht auszubilden und diese zuverlässig in dem gewünschten Abstand zu der Massefläche zu halten. Die Verwendung eines Antennenträgers aus Kunststoff ermöglicht darüber hinaus eine kostengünstige und stabile Herstellung des Moduls gemäß dieser Weiterbildung der Erfindung.

Ferner kann vorgesehen sein, daß der Antennenträger an dem wenigstens einen Abschirmdeckel angebracht, vorzugsweise auf diesen aufgesetzt, ist. So ist es möglich, sowohl den Abschirmdeckel als auch den Antenneträger im wesentlichen gleichförmig auszubilden und diese einfach mechanisch zu fügen, beispielsweise derart, daß der Abschirmdeckel in einer in dem Antennenträger vorgesehenen Ausnehmung zumindest abschnittsweise aufgenommen wird. Dies ermöglicht eine einfache Montage des Moduls und darüber hinaus eine zuverlässige Positionierung der Sende-/Empfangsantenne gegenüber dem abschnittsweise als Massefläche dienenden Abschirmdeckel.

Bei einer Weiterbildung der Erfindung kann vorgesehen sein, daß der Abschirmdeckel und der Antennenträger zu einer integralen Einheit zusammengefaßt sind. Dabei ist es möglich, das Funkmodul als kompakte, einfach handzuhabende Einheit auszubilden. Dies kann beispielsweise dadurch erfolgen, daß der Antennenträger an dem Abschirmdeckel durch Verklebung oder Verrastung fixiert ist.

In einem Ausführungsbeispiel der Erfindung kann vorgesehen sein, daß der wenigstens eine Abschirmdeckel als einseitig offener Hohlkörper ausgebildet ist und über an seinem freien Rand ausgebildete Befestigungsabschnitte an einer die Sende-/Empfangselektronik tragenden Leiterplatte angebracht oder anbringbar ist.

Ferner kann vorgesehen sein, daß der wenigstens eine Abschirmdeckel oder/und der Antennenträger austauschbar sind. Durch die Austauschbarkeit kann erreicht werden, daß unterschiedliche Antennenformen mit unterschiedlichen Abstrahlcharakteristiken verwendet werden können, welche beispielsweise ein Umrüsten des Funkmoduls erlauben.

Um die im Abstand zueinander angeordnete Sende-/Empfangselektronik und Sende-/Empfangsantenne zuverlässig zu koppeln, kann in einer Weiterbildung der Erfindung vorgesehen sein, daß die Sende-/Empfangsantenne über eine Kontaktfeder mit der Sende-/Empfangselektronik verbunden ist. Es sei darauf hingewiesen, daß die Kontaktfeder bereits bei der Montage des Funkmoduls selbst in ordnungsgemäßen Kontaktzustand gebracht wird, so daß bei der endgültigen Montage des Kommunikations-Endgeräts, d.h. beim Einbau des erfindungsgemäßen Funkmoduls in ein offenes Gehäuse kein weiteres Augenmerk auf die Kontaktfeder gerichtet werden muß, was die Montage des Kommunikations-Endgeräts erheblich erleichtert.

Die Erfindung betrifft ferner ein Mobilfunk-Endgerät, vorzugsweise Mobiltelefon, ausgeführt mit einem Funkmodul der vorstehend beschriebenen Art.

Die Erfindung wird im Folgenden anhand der beiliegenden Figuren beispielhaft beschrieben.

Es stellen dar:
- Fig. 1: eine Seitenansicht eines erfindungsgemäßen Funkmoduls und
- Fig. 2: eine Draufsicht auf das erfindungsgemäße Funkmodul.

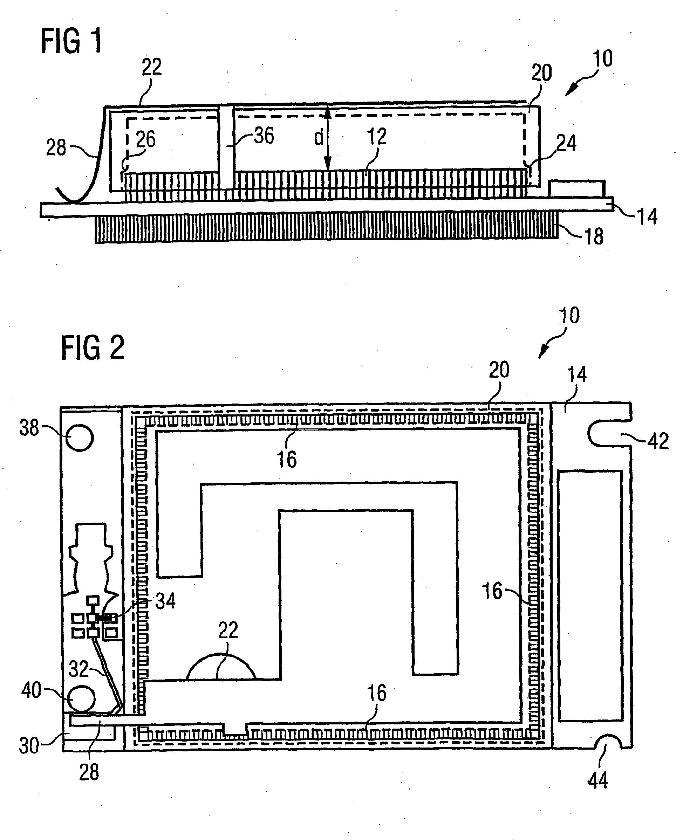

In den Figuren 1 und 2 ist ein erfindungsgemäßes Funkmodul allgemein mit 10 bezeichnet. Dieses umfaßt eine in einem Abschirmdeckel 12 untergebrachte, nicht näher bezeichnete Sende-/Empfangselektronik, welche auf einer Leiterplatte 14 installiert ist. Der Abschirmdeckel 12 ist als quaderförmiger Hohlkörper aus elektrisch leitendem Material, beispielsweise aus Metallblech, hergestellt und mit seiner offenen Unterseite über die Sende-/Empfangselektronik übergestülpt. An den freien Rändern des Abschirmdeckels 12 ist eine umlaufende Befestigungslasche 16 vorgesehen, auch Fiederung genannt, mit welcher der Abschirmdeckel 12 an der Leiterplatte 14 beispielsweise durch Verklebung oder Verlötung, befestigt ist. Auf der dem Abschirmdeckel abgewandten Seite der Leiterplatte 14 ist ein weiterer Abschirmdeckel 18 vorgesehen, welcher ebenfalls Elektronikkomponenten gegen elektromagnetische Störungen abschirmt.

Auf dem Abschirmdeckel 12 ist ein Antennenträger 20 aufgesetzt, an dessen der Leiterplatte 14 abgewandter Oberseite eine planare Antenne 22 angebracht ist. Der Antennenträger 20 ist aus einem elektrisch nicht leitenden Material, beispielsweise Kunststoffmaterial, hergestellt und besitzt ebenfalls die Gestalt eines quaderförmigen Hohlkörpers, wobei seine der Leiterplatte 14 zugewandte Unterseite mit einer Öffnung versehen ist. Diese Öffnung besitzt an ihrem Eingang einen abgestuften Rand 24, welcher derart dimensioniert und konturiert ist, daß er den Abschirmdeckel aufnehmend auf diesen aufgesetzt werden kann. Der abgestufte Rand weist eine Schulter 26 auf, welche mit der in Figur 1 obenliegenden Seite des Abschirmdeckels 12 in Anlage steht. Die Schulter 26 ist in dem Antennenträger 20 derart angeordnet, daß sie für einen festen vorbestimmten Abstand d zwischen der flächigen Oberseite des Abschirmdeckels 12, welche der Antenne 22 als Massefläche dient, und der dazu im wesentlichen parallel angeordneten Sende-/Empfangsantenne 22 sorgt. Dieser Abstand d ist für die Abstrahlcharakteristik der Antenne 22 mit maßgeblich.

Die Antenne 22 ist über eine Kontaktfeder 28 mit der Leiterplatte elektrisch leitend verbunden, wobei die Kontaktfeder 28 mit ihrem freien Ende auf einen auf der Leiterplatte 14 vorgesehenen Antennenanschlußbereich 30 zur Herstellung eines elektrischen Kontakts drückt. Der Antennenanschlußbereich 30 ist über eine Leiterbahn 32 an verschiedene Schaltungskomponenten 34 mit der in dem Abschirmdeckel 12 bzw. 18 angeordneten Schaltungselektronik gekoppelt.

Zur Anpassung der Antenne ist ferner eine Leiterbahn 36 vorgesehen, welche die Antenne 22 mit dem Abschirmdeckel 12 verbindet. Diese Leiterbahn 36 kann als Metallsteg oder Kontaktfeder ausgeführt sein.

Die in den Figuren 1 und 2 gezeigte Erfindung ermöglicht es, ein platzsparendes, funktionsfähiges - insbesondere mit Sende-/Empfangsantenne ausgebildetes - vorkonfiguriertes Funkmodul bereitzustellen, welches in der gezeigten Weise in einem montagefertigen Zustand ist und in ein offenes Gehäuse eines-Kommunikations-Endgeräts, beispielsweise eines Mobilfunk-Endgeräts, eingesetzt werden kann. Dabei ist es unerheblich, nach welchem Mobilfunk-Standard das Funkmodul arbeitet, beispielsweise nach dem GSM-Standard, dem UMTS-Standard oder anderen verbreiteten Standards.

Das erfindungsgemäße Funkmodul bietet die Möglichkeit, funktionsfähig in einem Mobilfunk-Endgerät eingebaut zu werden, ohne Sorgfalt tragen zu müssen, daß während der Montage eine Ankopplung an eine bereits in dem Gehäuse vorhandene Antenne erfolgt.

Es sei darauf hingewiesen, daß mit den Bezugszeichen 38, 40, 42 und 44 verschiedene Ausnehmungen zur Befestigung des erfindungsgemäßen Funkmoduls 10 in einem Gehäuse bezeichnet sind.

Ferner sei darauf hingewiesen, daß das erfindungsgemäße Funkmodul auch mit einer andersartigen Antenne als in den Figuren 1 und 2 ausgeführt und betrieben werden kann.

## Patentansprüche

1. Modul (10) zum Austauschen von Funkdaten, insbesondere von Mobilfunkdaten, in wenigstens einem Frequenzband, umfassend:
- eine Sende-/Empfangselektronik zum Verarbeiten von zu sendenden oder/und zu empfangenden Mobilfunksignalen,
- Abschirmmittel (12) zum elektromagnetischen Abschirmen der Sende-/Empfangselektronik und
- eine Sende-/Empfangsantenne (22) zum Senden oder/ und Empfangen von Mobilfunksignalen,
wobei die Abschirmmittel (12) wenigstens einen die Sende-/Empfangselektronik kapselnden elektrisch leitfähigen Abschirmdeckel (12) aufweisen und wobei die Sende-/Empfangsantenne (22) derart im Bereich des wenigstens einen Abschirmdeckels (12) angeordnet ist, dass dieser zumindest abschnittsweise beim Senden oder/und Empfangen von Mobilfunksignalen als Massefläche wirkt,
**dadurch gekennzeichnet, dass**
die Sende-/Empfangsantenne (22) über eine direkt mit der Sende-/Empfangsantenne (22) verbundene Kontaktfeder (28) mit der Sende-/Empfangselektronik verbunden ist, wobei Sende-/Empfangsantenne (22) und Kontaktfeder (28) eine bauliche Einheit formen.

2. Modul (10) nach Anspruch 1,
**dadurch gekennzeichnet,**
**dass** die Sende-/Empfangsantenne (22) als planare Antenne ausgebildet ist.

3. Modul (10) nach Anspruch 2,
**dadurch gekennzeichnet,**
**dass** die Sende-/Empfangsantenne (22) und die Massefläche in im Wesentlichen parallelen Ebenen liegen.

4. Modul (10) nach Anspruch 2 oder 3,
**dadurch gekennzeichnet,**
**dass** die Sende-/Empfangsantenne (22) an einem Antennenträger (20) aus elektrisch nicht leitendem Material, insbesondere aus Kunststoff, vorgesehen ist.

5. Modul (10) nach Anspruch 4,
**dadurch gekennzeichnet,**
**dass** der Antennenträger (20) an dem wenigstens einen Abschirmdeckel (12) angebracht, vorzugsweise auf diesem aufgesetzt, ist.

6. Modul (10) nach Anspruch 5,
**dadurch gekennzeichnet,**
**dass** der Abschirmdeckel (12) und der Antennenträger (20) zu einer integralen Einheit zusammengefasst sind.

7. Modul (10) nach einem der Ansprüche 4 oder 5,
**dadurch gekennzeichnet,**
**dass** der wenigstens eine Abschirmdeckel (12) als einseitig offener Hohlkörper ausgebildet ist und über an seinem freien Rand ausgebildete Befestigungsabschnitte (16) an einer die Sende-/Empfangselektronik tragenden Leiterplatte (14) angebracht oder anbringbar ist.

8. Modul (10) nach einem der Ansprüche 6 oder 7,
**dadurch gekennzeichnet,**
**dass** der wenigstens eine Abschirmdeckel (12) oder/und der Antennenträger (20) austauschbar sind.

9. Mobilfunk-Endgerät, vorzugsweise Mobiltelefon, ausgeführt mit einem Funkmodul (10) nach einem der vorangehenden Ansprüche.

## Claims

1. Module (10) for interchanging radio data, in particular mobile radio data, in at least one frequency band, comprising:
- transmitting/receiving electronics for processing mobile radio signals which are to be transmitted and/or to be received,
- screening means (12) for electromagnetic screening of the transmitting/receiving electronics, and
- a transmitting/receiving antenna (22) for transmitting and/or receiving mobile radio signals,
with the screening means (12) having at least one electrically conductive screening cover (12) which encapsulates the transmitting/receiving electronics, and with the transmitting/receiving antenna (22) being arranged in the region of the at least one screening cover (12) in such a way that, at least in places, this acts as an earth surface during transmission and/or reception of mobile radio signals,
**characterized in that**
the transmitting/receiving antenna (22) is connected to the transmitting/receiving electronics via a contact spring (28) which is connected directly to the transmitting/receiving antenna (22), transmitting/receiving antenna (22) and contact spring (28) forming a physical unit.

2. Module (10) according to Claim 1,
**characterized**
**in that** the transmitting/receiving antenna (22) is in the form of a planar antenna.

3. Module (10) according to Claim 2,
**characterized**
**in that** the transmitting/receiving antenna (22) and the earth surface lie in essentially parallel planes.

4. Module (10) according to Claim 2 or 3,
**characterized**
**in that** the transmitting/receiving antenna (22) is provided on an antenna mount (22) composed of electrically non-conductive material, in particular of plastic.

5. Module (10) according to Claim 4,
**characterized**
**in that** the antenna mount (20) is fitted to the at least one screening cover (12), and is preferably placed on it.

6. Module (10) according to Claim 5,
**characterized**
**in that** the screening cover (12) and the antenna mount (20) are combined to form an integral unit.

7. Module (10) according to one of Claims 4 or 5,
**characterized**
**in that** the at least one screening cover (12) is in the form of a hollow body which is open on one side, and is fitted, or can be fitted, via attachment sections (16), which are formed on its free edge, to a printed circuit board (14) on which the transmitting/receiving electronics are mounted.

8. Module (10) according to one of Claims 6 or 7,
**characterized**
**in that** the at least one screening cover (12) and/or the antenna mount (20) are replaceable or interchangeable.

9. Mobile radio terminal, preferably a mobile telephone, having a radio module (10) according to one of the preceding claims.

## Revendications

1. Module (10) d'échange de données radio, notamment de données de téléphonie mobile, dans au moins une bande de fréquence comprenant :
- une électronique d'émission/réception pour le traitement de signaux de téléphonie mobile à émettre ou/et à recevoir,
- des moyens (12) de blindage pour le blindage électromagnétique de l'électronique d'émission/réception et
- une antenne (22) d'émission/réception pour l'émission ou/et la réception de signaux de téléphonie mobile,
les moyens (12) de blindage ayant au moins un couvercle (12) de blindage conducteur de l'électricité encapsulant l'électronique d'émission/réception et l'antenne (22) d'émission/réception étant disposée dans la zone du au moins un couvercle (12) de blindage, de manière à ce que celui-ci agisse au moins par parties lors de l'émission ou/et de la réception de signaux de téléphonie mobile en tant que surface à la masse,
**caractérisé en ce que**
l'antenne (22) d'émission/réception est reliée à l'électronique d'émission/réception par un ressort (28) de contact relié directement à l'antenne (22) d'émission/réception, l'antenne (22) d'émission/réception et le ressort (28) de contact formant une unité de construction.

2. Module (10) suivant la revendication 1,
**caractérisé en ce que**
l'antenne (22) d'émission/réception est constituée en antenne planaire.

3. Module (10) suivant la revendication 2,
**caractérisé en ce que**
l'antenne (22) d'émission/réception et la surface à la masse se trouvent dans des plans sensiblement parallèles.

4. Module (10) suivant la revendication 2 ou 3,
**caractérisé en ce que**
l'antenne (22) d'émission/réception est prévue sur un support (20) d'antenne en un matériau non conducteur de l'électricité, notamment en matière plastique.

5. Module (10) suivant la revendication 4,
**caractérisé en ce que**
le support (20) d'antenne est mis sur le au moins un couvercle (12) de blindage, de préférence en y étant posé.

6. Module (10) suivant la revendication 5,
**caractérisé en ce que**
le couvercle (12) de blindage et le support (20) d'antenne sont réunis en une unité d'un seul tenant.

7. Module (10) suivant l'une des revendications 4 ou 5,
**caractérisé en ce que**
le au moins un couvercle (12) de blindage est constitué sous la forme d'un corps creux ouvert d'un côté et est mis ou peut être mis par des parties (16) de fixation formées sur son bord libre sur une plaquette (14) à circuit imprimé portant l'électronique d'émission/réception.

8. Module (10) suivant l'une des revendications 6 ou 7,
**caractérisé en ce que**
le au moins un couvercle (12) de blindage ou/et le support (20) d'antenne peuvent être remplacés.

9. Terminal de téléphonie mobile, de préférence téléphone mobile, réalisé avec un module (10) radio suivant l'une des revendications précédentes.
